# EUROPÄISCHE PATENTSCHRIFT

(11) **EP 3 183 052 B1**
(45) Veröffentlichungstag und Bekanntmachung des Hinweises auf die Patenterteilung: **03.06.2020**
(21) Anmeldenummer: 15784553.8
(22) Anmeldetag: 14.08.2015
(51) Int. Cl.: B01F 5/04, D21B 1/32, B01F 3/04, B03D 1/24

(54) **VERFAHREN UND VORRICHTUNG ZUR REINIGUNG VON FASERSTOFFSUSPENSIONEN MITTELS FLOTATION**
METHOD AND DEVICE FOR CLEANING FIBER SUSPENSIONS BY MEANS OF FLOTATION
PROCÉDÉ ET DISPOSITIF POUR ÉPURER DES SUSPENSIONS DE MATIÈRES FIBREUSES PAR FLOTTATION

(30) Priorität: 22.08.2014 DE 102014012666
(43) Veröffentlichungstag der Anmeldung: 28.06.2017
(73) Patentinhaber: RITHCO Papertec GmbH, 47803 Krefeld (DE)
(72) Erfinder: MENNE, Ralf, 80999 München (DE); RITTER, Andreas, 47803 Krefeld (DE); MAMAT, Oliver, 34537 Wega (DE)
(74) Vertreter: Fischer, Volker
(86) Internationale Anmeldenummer: PCT/DE2015/000408
(87) Internationale Veröffentlichungsnummer: WO 2016/026477

(56) Entgegenhaltungen:
- WO-A1-80/00423
- DE-A1-102011 009 792

## Beschreibung

Die Erfindung betrifft ein Verfahren und eine Vorrichtung zur Reinigung von verunreinigten Feststoff-Flüssigkeits-Gemischen und die Verwendung des Verfahrens und der Vorrichtung. Die Erfindung betrifft insbesondere ein Verfahren und eine Vorrichtung zur Entfernung von Störstoffen und Verunreinigungen aus einer wässrigen Papierfasersuspension durch Flotation.

Als Flotation wird ein physikalisch-chemisches Trennverfahren für feinkörnige Feststoffe aufgrund der unterschiedlichen Oberflächenbenetzbarkeit der Partikel bezeichnet. Dabei lagern sich Gasblasen leicht an hydrophobe, d. h. durch Wasser schwer benetzbare Oberflächen an und verleihen dadurch den Partikeln Auftrieb, so dass diese schwimmen. Voraussetzung ist, dass das verwendete Gas sich selbst schwer in Wasser löst. Unter dieser Bedingung sammeln sich an den hydrophoben Partikeloberflächen die ebenfalls hydrophoben Gasblasen bzw. an der Oberfläche der hydrophoben Gasblasen die ebenfalls hydrophoben Partikel. Infolgedessen wird durch Flotation ein die auszutragenden Stoffe enthaltender Schaum oder Schwimmschlamm gebildet.

Bekannt sind Flotierungsverfahren für die Aufbereitung von einer aus bedrucktem Altpapier gewonnenen Suspension, in der die Druckfarbenpartikel bereits von den Fasern abgelöst sind. Dabei wird der Umstand genutzt, dass der Faserstoff auf Grund seines eher hydrophilen Charakters in der Fasersuspension verbleibt, wohingegen die unerwünschten Störstoffteilchen hydrophob sind und deshalb zusammen mit den Luftblasen in den Schaum gelangen. Weil dabei nicht alle Feststoffe ausflotiert, sondern die Fasern von den Verunreinigungen getrennt und im Wesentlichen nur die Verunreinigungen ausflotiert werden, spricht man von selektiver Flotation. Die durch die selektive Flotation ausgetragenen Verunreinigungen sind neben der Druckerfarbe insbesondere Kleber, feine Kunststoffpartikel und eventuell auch Harze.

Bei der Altpapieraufbereitung wird Altpapier im Stofflöser (Pulper) aufgeschlagen und mit Rückwasser versetzt, um so eine pumpfähige Stoffsuspension zu erhalten. Hier werden als erster Sortierschritt große, nicht aufschlagbare und nicht pumpfähige Störstoffe und Verunreinigungen, wie z.B. Schnüre und feste Folien, entfernt. Die entstandene Faserstoffsuspension durchläuft dann mehrere mechanische Sortierstufen, z.B. Siebkörbe, in denen weitere kleinere Störstoffe und Verunreinigungen ausgeschleust werden.

Nach der sogenannten Vorsortierung durchläuft die Faserstoffsuspension eine Nachsortierung, oftmals auch eine Deinkinganlage oder noch feinere Siebkörbe. Der Begriff "Deinking" wird in der Regel nicht nur für die Entfernung von Druckfarbenpartikeln (ink = Druckfarbe), sondern auch allgemein für die selektive Flotation von Verunreinigungen aus Faserstoffsuspensionen verwendet. In einer DeinkingAnlage wird die Faserstoffsuspension mit Luft angereichert.

Dazu wird zunächst Wasser mit Luft angereichert. Diese Anreicherung des Wassers mit Luft erfordert einen erheblichen, meist elektrischen Energieaufwand. Eine Pumpe bringt ein Wasservolumen auf etwa 8 bar Wasserdruck und fördert dieses in einen Druckbehälter. In diesen wird mit etwa 10 bar Druckluft eingeleitet, wobei das Luftvolumen etwa 20 % des Wasservolumens entspricht (Das Verhältnis von Luft zu Wasser ist hier etwa 1 zu 5).

Zur Anreicherung von Wasser mit Luft sind auch nach dem Venturi-Prinzip arbeitende Mischelemente bekannt. So offenbart beispielsweise die DE 693 29 061 T2 eine Vorrichtung zum effizienten dispergierenden Mischen von Gasblasen mit einer Flüssigkeit und wirksamen Lösen eines Gases in einer Flüssigkeit. Die Vorrichtung umfasst ein nach dem Venturi-Prinzip arbeitendes Mischelement mit einem gedrosselten Abschnitt, welcher durch einen Bereich eines Fluidströmungskanals ausgebildet wird, dessen Querschnittsbereich verringert ist, einem mit dem gedrosselten Abschnitt zusammenhängenden, durch allmähliche Erweiterung eines Teils des Fluidströmungskanales zur Abstromseite hin erweiterten Abschnitt, einem Gaseinlass, der in einem Bereich des erweiterten Abschnittes etwas abstromseitig von dem gedrosselten Abschnitt angeordnet ist und einem abstromseitig von dem erweiterten Abschnitt angeordneten Mischabschnitt mit einem abstromseitigen Ende. Die Vorrichtung umfasst weiterhin ein Flüssigkeitsrohr mit einem proximalen Ende, das mit dem abstromseitigen Ende des Mischabschnittes des Mischelementes verbunden ist, und einem distalen Ende, welches mit einem Düsenabschnitt, der eine Vielzahl von Düsenlöchern aufweist, verbunden ist, wobei unmittelbar vor dem Düsenabschnitt ein zweiter gedrosselter Abschnitt angeordnet ist, der durch einen in der Querschnittsfläche verringerten Bereich des Fluidströmungskanales gebildet wird.

Das mit Luft angereicherte Wasser, d.h. die Luftsuspension, wird dann mit der Faserstoffsuspension zusammengeführt.

Nur die bereits von den Fasern abgetrennten Störstoffe und Verunreinigungen setzen sich an die Luftblasen und werden in einem nachgeschalteten Fraktionator mittels Flotation des entstehenden Schaums ausgeschieden. Noch an den Fasern anhaftende Störstoffe und Verunreinigungen bleiben unberührt in der Faserstoffsuspension und beeinflussen die Papierqualität, wie die Be- und Verdruckbarkeit sowie physikalische Parameter des Papiers. Auch ein mehrfacher Durchlauf durch mehrere, beispielsweise in Kaskade geschaltete Deinkingzellen erbringt meist nur ausreichende und keine guten Ergebnisse.

Bekannt sind chemische Hilfsstoffe, um die Störstoffe und Verunreinigungen von den Papierfasern zu lösen bzw. diese zu maskieren. Allerdings sind die bekannten chemischen Hilfsstoffe nicht hinreichend effizient und auch nicht ökonomisch.

Ein weiteres Problem bekannter Flotierungsverfahren und -einrichtungen besteht darin, dass nicht nur Störstoffe und Verunreinigungen flotiert werden, sondern auch unerwünscht ein Papierfaseranteil von mehr als 2 % mit ausgeschleust wird.

In der Praxis besteht eine Deinkinganlage aus mehreren Deinkingzellen, die nacheinander geschaltet sind. Die abgeschiedenen Störstoffe und Verunreinigungen werden in der Regel in eine Sekundärzelle geführt, um verlorengegangene Papierfasern zurückzugewinnen. Dennoch ist der Faserverlust in einer Deinkinganlage größer 2 %.

Die Störstoffe und Verunreinigungen, die in einer Deinkinganlage entfernt werden, sind zum größten Teil nur Druckfarbenpartikel. Andere unerwünschte Partikel, wie z.B. Stickies, Metalle, Plastik, Harze und organische Stoffe, werden in einer Deinkinganlage zumeist nicht ausgetragen.

Der Stoffdichtenbereich in einer Deinkinganlage liegt im Normalfall zwischen 1 % und 1,5 %. Der pH-Wert liegt bei ca. 7.

Der Stand der Technik bezüglich Flotationsverfahren für Faserstoffsuspensionen ist bereits sehr weit fortgeschritten.

So offenbart die DE 10 2008 056 040 A1 ein Verfahren zur Entfernung von Störstoffen mit Hilfe von Gasblasen aus einer wässrigen Faserstoffsuspension, wobei dem Strom der Fasersuspension in mindestens einer Mischvorrichtung mindestens ein Strom von Gas zugeführt und Gasblasen gebildet werden, wodurch Störstoffe aus der Faserstoffsuspension in einem Flotationsschaum gesammelt und mit diesem abgeführt werden. Dabei wird in das Innere des Stromes der Fasersuspension mindestens ein Innenstrom von Gas, alternativ auch an das Äußere des Stromes der Fasersuspension ein Außenstrom von Gas, zugeführt.

Die DE 10 2008 064 271 A1 und WO80/00423 A1 offenbaren ein Verfahren zur Entfernung von Feststoffen mit Hilfe von Gasblasen aus einer wässrigen Faserstoffsuspension, insbesondere Altpapiersuspension, wobei der Fasersuspension in mindestens einer Mischvorrichtung Gas zugeführt und Gasblasen gebildet werden. Danach wird die begaste Suspension aus der Mischvorrichtung über einen einstellbaren Strömungswiderstand, insbesondere durch eine Drossel, in einen Flotationsbehälter geführt, indem die Abscheidung von Feststoffen durch Flotation erfolgt. Das Verfahren ermöglicht die Einstellung des Luftgehaltes der begasten Suspension.

Weiterhin offenbart die DE 10 2011 009 792 A1 ein Verfahren zur Reinigung von verunreinigten Fasern, bei dem in einem ersten Verfahrensschritt die zu reinigenden Fasern mit Flüssigkeit versetzt und in einem zweiten Verfahrensschritt als Feststoff-Flüssigkeits-Gemisch strömend mit einem Luft-Flüssigkeits-Gemisch zusammengeführt werden, wobei das Zusammenströmen des Luft-Flüssigkeits-Gemisches mit dem Feststoff-Flüssigkeits-Gemisch mit stark unterschiedlichen Strömungsgeschwindigkeiten erfolgt und dieser Prozess dabei so geführt wird, dass gleichzeitig eine deutliche Verdünnung des Feststoff-Flüssigkeits-Gemisches erfolgt und die gelösten Verunreinigungspartikel sich an den Luftblasen aus dem Luft-Flüssigkeits-Gemisch festsetzen, und in einem dritten Verfahrensschritt zur Trennung von Faseranteil, verunreinigungsbelastetem Schaum aus den Luftblasen sowie Flüssigkeit das im zweiten Verfahrensschritt entstandene Gemisch einer Fraktionierung unterworfen wird, bei der der auf der Oberfläche entstehende Schaum, belastet mit Verunreinigungen, von den gereinigten Fasern getrennt wird.

Mit den gegenwärtigen Flotationsanlagen und Verfahren zur Entfernung von Störstoffen und Verunreinigungen mit Hilfe von Gasblasen aus einer Faserstoffsuspension sind jedoch nur bestimmte Störstoffe und Verunreinigungen aus der Fasersuspension entfernbar. Wünschenswert wäre es, wenn durch das zusätzliche Ablösen von Schmutzpartikeln von den Fasern, insbesondere Papierfasern, nicht nur Druckfarbenpartikel flotiert, sondern auch ein Großteil anderer Störstoffe und Verunreinigungen (Stickies, kleinste Plastikteilchen usw.) im Schaum angereichert und aus der Faserstoffsuspension ausgetragen werden könnten.

Aufgabe der Erfindung ist es daher, eine Vorrichtung und ein Verfahren zu schaffen, welche die vorbenannten Nachteile des Standes der Technik überwinden.

Diese Aufgabe wir durch eine Vorrichtung gemäß dem unabhängigen Anspruch 1 und ein Verfahren gemäß dem unabhängigen Anspruch 6 gelöst. Vorteilhafte Ausgestaltungen der Vorrichtung sind in den abhängigen Ansprüchen 2 bis 5, vorteilhafte Ausgestaltungen des Verfahrens in den abhängigen Ansprüchen 7 bis 12 angegeben.

Ein erster Aspekt der Erfindung betrifft eine Vorrichtung zur Reinigung von verunreinigten Feststoff-Flüssigkeits-Gemischen, umfassend zumindest eine erste Rohrleitung für die Zuführung einer Flüssigkeit, bevorzugt Wasser, zumindest eine zweite Rohrleitung für die Zuführung eines Feststoff-Flüssigkeits-Gemisches, bevorzugt eine Faserstoffsuspension, besonders bevorzugt eine Papierfasersuspension, zumindest eine dritte Rohrleitung, welche die erste und die zweite Rohrleitung verbindet und zumindest ein Mischelement umfasst, welches nach dem Venturi-Prinzip arbeitet, nachfolgend Venturi-Mischelement genannt, wobei das Venturi-Mischelement zwei gegeneinander gerichtete Konen aufweist, die jeweils mit ihrer kleinen Durchgangsöffnung in einer einen Hohlraum bildenden Kammer münden, wobei der Bereich der Einmündung in die einen Hohlraum bildende Kammer derart ausgebildet ist, dass die jeweils kleine Durchgangsöffnung der Konen in einem nicht konischen Leitungsabschnitt entsprechend der Querschnittsfläche der kleinen Durchgangsöffnungen fortgesetzt wird, diese nicht konischen Leitungsabschnitte in die Kammer zwischen den Konen einmünden, die große Durchgangsöffnung des ersten Konus über die dritte Rohrleitung mit der ersten Rohrleitung verbunden ist und die große Durchgangsöffnung des zweiten Konus über die dritte Rohrleitung mit der zweiten Rohrleitung verbunden ist, die kleine Durchgangsöffnung des ersten Konus kleiner als die kleine Durchgangsöffnung des zweiten Konus ausgebildet ist und die zwei gegeneinander gerichteten Konen und die nichtkonischen Leitungsabschnitte längsaxial zueinander angeordnet sind, zumindest eine vierte Rohrleitung zur Leitung eines Gases, vorzugsweise Luft, wobei die vierte Rohrleitung in die einen Hohlraum bildende Kammer des Venturi-Mischelementes einmündet, sowie mindestens einen der zweiten Rohrleitung nachgeschalteten Fraktionator zum Ausscheiden des mittels Flotation entstehenden Schaumes.

Bevorzugt ist die kleine Durchgangsöffnung des ersten Konus zwischen 20 bis 40 % kleiner als die kleine Durchgangsöffnung des zweiten Konus.

Durch die Zuführung der Flüssigkeit zu dem Venturi-Mischelement und Leitung des Gases, vorzugsweise Luft zu dem Venturi-Mischelement, erfolgt in dem Venturi-Mischelement eine Anreicherung der Flüssigkeit mit Gasblasen unterschiedlichen Durchmessers, wobei gleichzeitig die Strömungsgeschwindigkeit der Flüssigkeit erhöht wird. Die mit Gasblasen unterschiedlichen Durchmessers angereicherte Flüssigkeit wird nachfolgend in das verunreinigte Feststoff-Flüssigkeits-Gemisch eingeleitet, wobei die mit Gasblasen angereicherte Flüssigkeit eine höhere Strömungsgeschwindigkeit aufweist als das Feststoff-Flüssigkeits-Gemisch. Es erfolgt eine Vermischung der mit Gasblasen angereicherten Flüssigkeit und des Feststoff-Flüssigkeits-Gemisches, wobei durch die kinetische Energie der Gasblasen Störstoffe und Verunreinigungen von den Feststoffen des Feststoff-Flüssigkeits-Gemisches abgelöst werden und sich an den Gasblasen anlagern. Durch die Anlagerung an den Gasblasen werden nachfolgend die Störstoffe und Verunreinigungen als Schaum aus dem Feststoff-Flüssigkeits-Gemisch ausgetragen. Abschließend erfolgt eine Trennung des Feststoff-Flüssigkeits-Gemisches und des Schaumes in einem nachfolgenden Flotationsverfahren.

Wesentlich ist, dass die Einmündung der beiden gegeneinander gerichteten Konen in den Hohlraum zwischen den beiden kleinen Durchgangsöffnungen der Konen, in den die vierte Rohrleitung einmündet, derart ausgebildet ist, dass die jeweils kleine Durchgangsöffnung der Konen in einem nicht konischen Leitungsabschnitt entsprechend der Querschnittsfläche der kleinen Durchgangsöffnungen fortgesetzt wird, und dieser nicht konische Leitungsabschnitt in den besagten Hohlraum zwischen den Konen einmündet. Dieser Hohlraum bildet eine erhebliche Vergrößerung des Durchgangsquerschnittes für die Flüssigkeit. Über die dritte Rohrleitung dem Venturi-Mischelement zugeführte Flüssigkeit wird durch den ersten Konus in seiner Strömungsgeschwindigkeit beschleunigt und tritt, nachdem sie durch den sich an die kleine Durchgangsöffnung des Konus anschließenden nichtkonischen Leitungsabschnitt durchströmt hat, als Flüssigkeitsstrahl mit erhöhter Strömungsgeschwindigkeit in den Hohlraum ein. Dabei wird ein Unterdruck erzeugt, infolgedessen durch die vierte Rohrleitung Gas in die Kammer eingesaugt wird. Die mit erhöhter Geschwindigkeit in den Hohlraum einströmende Flüssigkeit nimmt dieses in den Hohlraum eingesaugte Gas auf bzw. reißt es mit.

Nach dem Hohlraum, d.h. nach der sprungartigen Vergrößerung des Durchgangsquerschnittes für die Flüssigkeit, die diesen Hohlraum quasi als Flüssigkeitsstrahl passiert, tritt der Flüssigkeitsstrahl in den nichtkonischen Leitungsabschnitt der kleinen Durchgangsöffnung des zweiten Konus ein. Dieser nichtkonische Leitungsabschnitt besitzt einen größeren Durchmesser als der Flüssigkeitsstrahl. An ihn schließt sich der zweite Konus an, wobei eine weitere Vergrößerung des Durchgangsquerschnittes für die Flüssigkeit erfolgt. In diesem nichtkonischen Leitungsabschnitt und nachfolgend dem zweiten Konus des Venturi-Mischelementes erfolgt eine sehr intensive Vermischung der Flüssigkeit mit dem aufgenommenen bzw. mitgerissenen Gas, wobei sich das Gas als kleine Blasen in der Flüssigkeit verteilt. Beim Austritt aus dem Venturi-Mischelement in die dritte Rohrleitung ist die Flüssigkeit stark mit unterschiedlich großen Gasblasen angereichert. Dieses Gemisch an unterschiedlich großen Gasblasen in der Flüssigkeit ist wichtig, um eine Anlagerung an eine große Bandbreite unterschiedlich großer abzutrennender Störstoffe und Verunreinigungen zu bewirken. Die Menge und die Größenverteilung der Gasblasen in der Flüssigkeit hängt dabei neben der Strömungsgeschwindigkeit der Flüssigkeit und der angesaugten Menge Gases in hohem Maße von der im Detail nachfolgend beschriebenen konstruktiven Ausbildung des Venturi-Mischelementes ab.

In einer Ausführungsform der Erfindung liegt der Durchmesser der großen Durchgangsöffnung des ersten Konus zwischen 10 und 20 mm und der Durchmesser der kleinen Durchgangsöffnung des ersten Konus zwischen 14 und 16 mm, wobei selbstverständlich der Durchmesser der kleinen Durchgangsöffnung immer kleiner als der Durchmesser der großen Durchgangsöffnung ist. Der Durchmesser der kleinen Durchgangsöffnung des zweiten Konus liegt zwischen 12 und 20 mm und der Durchmesser der großen Durchgangsöffnung des zweiten Konus zwischen 16 und 24 mm, wobei auch hier selbstverständlich der Durchmesser der kleinen Durchgangsöffnung immer kleiner als der Durchmesser der großen Durchgangsöffnung ist. Außerdem steht die Bedingung, dass der Durchmesser der kleinen Durchgangsöffnung des ersten Konus mindestens 2 mm kleiner ist als der Durchmesser der kleinen Durchgangsöffnung des zweiten Konus. Die Länge der nicht konischen Leitungsabschnitte liegt zwischen 20 und 80 mm. Der Abstand der beiden gegenüberliegenden Einmündungen der nicht konischen Leitungsabschnitte in den Hohlraum, also die Breite des Hohlraumes, beträgt zwischen 6 und 20 mm.

In einer weiteren Ausführungsform der Erfindung weist die mit Gasblasen unterschiedlicher Größe und Größenverteilung angereicherte Flüssigkeit ein Verhältnis von Gas zu Flüssigkeit von 1 - 4 : 1, bevorzugt 1 : 1 auf.

In einer Ausführungsform der Erfindung weist das Venturi-Mischelement eine Vielzahl von jeweils paarweise gegeneinander gerichteten Konen auf, die jeweils mit ihrer kleinen Durchgangsöffnung in einer einen Hohlraum bildenden Kammer münden, wobei der Bereich der Einmündung in den Hohlraum derart ausgebildet ist, dass die jeweils kleine Durchgangsöffnung der Konen in einem nicht konischen Leitungsabschnitt entsprechend der Querschnittsfläche der kleinen Durchgangsöffnungen fortgesetzt wird und dieser nicht konische Leitungsabschnitt in den besagten Hohlraum zwischen den Konen einmündet. Dabei münden alle Konen in einen gemeinsamen Hohlraum ein, wobei, wie bereits beschrieben, jeweils zwei gegeneinander gerichtete Konen axial zueinander ausgerichtet sind. Die Anzahl der Konenpaare liegt zwischen 2 und 25, bevorzugt zwischen 4 und 20. Da die Gasmenge in unterschiedlichen Systemen stark variieren kann, ist es vorteilhaft, anwendungsspezifisch die aufgenommene Gasmenge und Blasengröße durch die Anzahl der angeordneten Konenpaare im Venturi-Mischelement einzustellen. So kann zum Beispiel in einer DN 60-Leitung ein Venturi-Mischelement mit bis zu 4 Konenpaaren verwendet werden. In einem Venturi-Mischelement für eine DN 80-Leitung sind beispielsweise bis zu 7 Konenpaare möglich. In einem Venturi-Mischelement für eine DN 120-Leitung können bis zu 19 Konenpaare angeordnet sein.

In einer weiteren Ausführungsform der Erfindung ist das Venturi-Mischelement derart ausgebildet, dass die Gasblasengröße anwendungsspezifisch eingestellt werden kann. Dabei können beispielsweise die Querschnitte der dritten und vierten Rohrleitung im Venturi-Mischelement verändert werden. Auch die Querschnitte der kleinen Durchgangsöffnungen der Konen und die Längen der nicht konischen Leitungsabschnitte, über die die kleinen Durchgangsöffnungen der Konen in den Hohlraum zwischen den Konen im Venturi-Mischelement einmünden, können anwendungsspezifisch angepasst werden und beeinflussen die Größe sowie Größenverteilung der Gasblasen in der Flüssigkeit.

In einer Ausführungsform der Erfindung mündet die dritte Rohrleitung in einem Winkel von 90° ± 45° in die zweite Rohrleitung ein.

In einer weiteren Ausführungsform der Erfindung mündet die dritte Rohrleitung in einem Winkel von 90° in die zweite Rohrleitung ein. Bevorzugt weist die zweite Rohrleitung dabei einen größeren Durchmesser auf als die dritte Rohrleitung. Beim Einleiten der mit unterschiedlich großen Gasblasen angereicherten Flüssigkeit in das Feststoff-Flüssigkeits-Gemisch erfolgt das Ablösen der Schmutzpartikel von der Papierfaser.

In einer weiteren Ausführungsform der Erfindung mündet die dritte Rohrleitung in einem Winkel von 45° in Strömungsrichtung der zweiten Rohleitung in die zweite Rohrleitung ein.

In einer alternativen Ausführungsform der Erfindung mündet die dritte Rohrleitung in einem Winkel von 45° entgegengesetzt zur Strömungsrichtung der zweiten Rohleitung in die zweite Rohrleitung ein. Es sollte dabei darauf geachtet werden, den Winkel von 45° nicht zu unterschreiten, da sonst die Durchmischung der mit Gasblasen angereicherten Flüssigkeit mit dem Feststoff-Flüssigkeits-Gemisch weniger effektiv ist und somit die nachfolgende Fraktionierung in der Flotation nicht mehr effektiv arbeitet.

In einer weiteren Ausführungsform der Erfindung weist die Flüssigkeit in der ersten Rohrleitung einen Druck von 2 bis 4 bar auf.

In einer weiteren Ausführungsform der Erfindung weist die Flüssigkeit in der ersten Rohrleitung eine Strömungsgeschwindigkeit von 1 m/s bis 5 m/s auf.

In einer weiteren Ausführungsform der Erfindung weist das Feststoff-Flüssigkeits-Gemisch in der zweiten Rohrleitung eine Strömungsgeschwindigkeit von < 4 m/s auf.

In einer weiteren Ausführungsform der Erfindung weist die mit Gasblasen angereicherte Flüssigkeit in der dritten Rohrleitung nach dem Venturi-Mischelement eine Strömungsgeschwindigkeit von 5 - 40 m/s, vorzugsweise 5 - 25 m/s, bevorzugt von 9 - 25 m/s, auf.

In einer weiteren Ausführungsform der Erfindung ist die Flüssigkeit Wasser, bevorzugt Klarwasser oder Siebwasser.

In einer weiteren Ausführungsform der Erfindung umfasst die Vorrichtung eine oder mehrere weitere Rohrleitung/en mit jeweils einem Venturi-Mischelement, welche kaskadenförmig angeordnet sind und der Einmündung der dritten Rohrleitung in die zweite Rohrleitung nachgeschaltet sind. Durch die mehrfache Einleitung einer mit Gasblasen unterschiedlicher Größe angereicherten Flüssigkeit in das Feststoff-Flüssigkeits-Gemisch erfolgt eine bessere Vermischung der Gasblasen in dem Feststoff-Flüssigkeits-Gemisch. Zudem erhöht sich dadurch der Reinigungseffekt, sodass der Einsatz mehrerer Venturi-Mischelemente und die mehrfache Einleitung der mit Gasblasen angereicherten Flüssigkeit in ein Feststoff-Flüssigkeits-Gemisch vorteilhaft ist.

In einer weiteren Ausführungsform der Erfindung ist die Einmündung der dritten Rohrleitung in die zweite Rohrleitung fächerförmig ausgebildet. Dadurch wird eine über eine vergrößerte Einleitungsfläche verteilte Einleitung der mit Gasblasen angereicherten Flüssigkeit in das Feststoff-Flüssigkeits-Gemisch ermöglicht.

In einer weiteren Ausführungsform der Erfindung weist das Feststoff-Flüssigkeit-Gemisch nach Einleitung der mit Gasblasen angereicherten Flüssigkeit einen Feststoffanteil von ≤ 2 Gew% auf.

In einer weiteren Ausführungsform der Erfindung umfasst die Vorrichtung Steuerungsmöglichkeiten. So sind vor und nach dem Venturi-Mischelement regelbare Schieber angeordnet. Gleichfalls ein regelbarer Schieber ist in der vierten Rohrleitung angeordnet. Diese Schieber können elektrisch oder manuell bedient werden. Die genannten Steuerungsmöglichkeiten beeinflussen die Anzahl, die Größe und die Größenverteilung der Gasblasen in der Flüssigkeit.

Ein wesentlicher Vorteil der erfindungsgemäßen Vorrichtung, insbesondere des Venturi-Mischelementes, besteht darin, dass die Flüssigkeit mit einem Gemisch an Gasblasen unterschiedlicher Größe angereichert wird, ohne dass es dazu einer energieaufwendigen Komprimierung des Gases bedarf. Es hat sich darüber hinaus gezeigt, dass die Gasblasen in der Flüssigkeit über eine hohe kinetische Energie verfügen, wodurch beim Auftreffen der Gasblasen auf Fasern, an denen Störstoffe oder Verunreinigungen haften, ein Ablösen der Störstoffe oder Verunreinigungen von den Fasern bewirkt wird.

Ein weiterer Aspekt der Erfindung betrifft ein Verfahren zur Reinigung von verunreinigten Feststoff-Flüssigkeits-Gemischen, umfassend die Schritte:
- Zuführung einer Flüssigkeit, bevorzugt Wasser, zu einem Venturi-Mischelement,
- Leitung eines Gases, vorzugsweise Luft, zu dem Venturi-Mischelement,
- Anreicherung der Flüssigkeit mit Gasblasen unterschiedlicher Größe und Grö-ßenverteilung in dem Venturi-Mischelement,
- Zuführung der mit Gasblasen unterschiedlicher Größe und Größenverteilung angereicherten Flüssigkeit zu einem verunreinigten Feststoff-Flüssigkeits-Gemisch, wobei die mit Gasblasen angereicherte Flüssigkeit eine höhere Strömungsgeschwindigkeit aufweist als das Feststoff-Flüssigkeits-Gemisch,
- Vermischung der mit Gasblasen angereicherten Flüssigkeit und des Feststoff-Flüssigkeits-Gemisches, wobei durch die kinetische Energie der Gasblasen Störstoffe und Verunreinigungen von den Feststoffen des Feststoff-Flüssigkeits-Gemisches abgelöst werden und sich an den Gasblasen anlagern, wobei die Gasblasen nachfolgend die Störstoffe und Verunreinigungen als Schaum aus dem Feststoff-Flüssigkeits-Gemisch ausgetragen,
- Trennung des Feststoff-Flüssigkeits-Gemisches und des Schaumes in einem nachfolgenden Flotationsverfahren.

In einer Ausführungsform der Erfindung ist das Feststoff-Flüssigkeit-Gemisch eine Fasersuspension, bevorzugt eine Papierfasersuspension.

In einer weiteren Ausführungsform der Erfindung erfolgt die Anreicherung der Flüssigkeit mit Gasblasen unterschiedlicher Größe und Größenverteilung derart, dass die mit Gasblasen angereicherte Flüssigkeit ein Verhältnis von Gas zu Flüssigkeit von 1 - 4 : 1, bevorzugt 1 : 1 aufweist.

In einer weiteren Ausführungsform der Erfindung weist die Flüssigkeit in der ersten Rohrleitung einen Druck von 2 bis 4 bar auf.

In einer weiteren Ausführungsform der Erfindung strömt die Flüssigkeit in der ersten Rohrleitung mit einer Strömungsgeschwindigkeit von 1 m/s bis 5 m/s.

In einer weiteren Ausführungsform der Erfindung strömt das Feststoff-Flüssigkeits-Gemisch in der zweiten Rohrleitung mit einer Strömungsgeschwindigkeit von < 4 m/s.

In einer weiteren Ausführungsform der Erfindung strömt die mit Gasblasen angereicherte Flüssigkeit in der dritten Rohrleitung nach dem Venturi-Mischelement mit einer Strömungsgeschwindigkeit von 5-40 m/s, vorzugsweise 5- 25 m/s, bevorzugt von 9-25 m/s.

In einer Ausführungsform der Erfindung erfolgt die Zuführung der mit Gasblasen angereicherten Flüssigkeit in das Feststoff-Flüssigkeits-Gemisch in einem Winkel von 90° ± 45°.

In einer weiteren Ausführungsform der Erfindung erfolgt die Zuführung der mit Gasblasen angereicherten Flüssigkeit in das Feststoff-Flüssigkeits-Gemisch in einem Winkel von 90°.

In einer weiteren Ausführungsform der Erfindung erfolgt die Zuführung der mit Gasblasen angereicherten Flüssigkeit in das Feststoff-Flüssigkeits-Gemisch in einem Winkel von 45° in Strömungsrichtung des Feststoff-Flüssigkeits-Gemischs.

In einer alternativen Ausführungsform der Erfindung erfolgt die Zuführung der mit Gasblasen angereicherten Flüssigkeit in das Feststoff-Flüssigkeits-Gemisch in einem Winkel von 45° entgegen der Strömungsrichtung des Feststoff-Flüssigkeits-Gemisches.

In einer weiteren Ausführungsform der Erfindung ist die Flüssigkeit Wasser, bevorzugt Klarwasser oder Siebwasser.

Ein weiterer Aspekt der Erfindung betrifft die Verwendung einer erfindungsgemäßen Vorrichtung und eines erfindungsgemäßen Verfahrens zur Reinigung von verunreinigten Feststoff-Flüssigkeits-Gemischen, bevorzugt verunreinigten Fasersuspensionen, besonders bevorzugt verunreinigten Papierfasersuspensionen.

Zusammenfassend lässt sich feststellen, dass die einströmende Menge der Flüssigkeit vor dem Venturi-Mischelement gleich ist der aus dem Venturi-Mischelement ausströmenden Menge, wobei der Druck nach dem Venturi-Mischelement geringer ist. Die Strömungsgeschwindigkeit ist nach dem Venturi-Mischelement höher, da die Flüssigkeit mit Gasblasen angereichert ist.

Die Menge an Flüssigkeit und deren Strömungsgeschwindigkeit können je nach Anwendungsfall unterschiedlich sein. Sie sind zur Erzielung einer optimalen Reinigungswirkung an den jeweiligen Anwendungsfall anzupassen.

Wichtig zur Erzielung einer guten Reinigungswirkung ist eine höhere Strömungsgeschwindigkeit der mit Gasblasen angereicherten Flüssigkeit als die Strömungsgeschwindigkeit des Feststoff-Flüssigkeits-Gemisches.

Bevorzugte Weiterbildungen der Erfindung ergeben sich aus den Kombinationen der Ansprüche oder einzelner Merkmale davon.

Die Erfindung wird nachfolgend anhand einiger Ausführungsbeispiele weiter erläutert. Die zugehörigen Zeichnungen zeigen in
- Figur 1:: eine schematische Darstellung einer Vorrichtung zur Reinigung von verunreinigten Feststoff-Flüssigkeits-Gemischen, in
- Figur 2:: eine schematische Schnittdarstellung eines Venturi-Mischelementes, in
- Figur 3a:: eine schematische Darstellung der Anordnung der kleinen Durchgangsöffnungen der Konen in einer Seitenwand des Hohlraumes zwischen den Konen für ein Venturi-Mischelement mit 4 Konenpaaren, in
- Figur 3b:: eine schematische Darstellung der Anordnung der kleinen Durchgangsöffnungen der Konen in einer Seitenwand des Hohlraumes zwischen den Konen für ein Venturi-Mischelement mit 7 Konenpaaren, in
- Figur 3c:: eine schematische Darstellung der Anordnung der kleinen Durchgangsöffnungen der Konen in einer Seitenwand des Hohlraumes zwischen den Konen für ein Venturi-Mischelement mit 19 Konenpaaren, in
- Figur 4a:: eine schematische Darstellung einer Ausgestaltung der Vorrichtung zur Reinigung von verunreinigten Feststoff-Flüssigkeits-Gemischen, in
- Figur 4b:: eine schematische Darstellung einer weiteren Ausgestaltung der Vorrichtung zur Reinigung von verunreinigten Feststoff-Flüssigkeits-Gemischen, in
- Figur 4c:: eine schematische Darstellung einer weiteren Ausgestaltung der Vorrichtung zur Reinigung von verunreinigten Feststoff-Flüssigkeits-Gemischen, in
- Figur 5a:: eine schematische Querschnittsdarstellung senkrecht zur Strömungsrichtung der Einmündung der dritten Rohrleitung in die zweite Rohrleitung, in
- Figur 5b:: eine schematische Querschnittsdarstellung der Einmündung der dritten Rohrleitung in die zweite Rohrleitung und in
- Figur 5c:: eine weitere schematische Querschnittsdarstellung einer alternativen Ausgestaltung der Einmündung der dritten Rohrleitung in die zweite Rohrleitung.

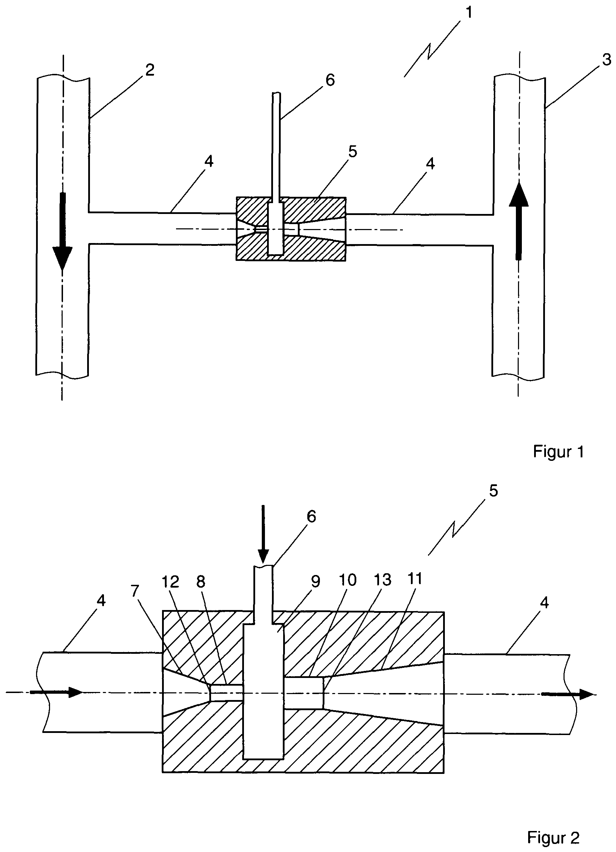

In einem ersten Ausführungsbeispiel ist in der Figur 1 schematisch eine erfindungsgemäße Vorrichtung 1 dargestellt mit einer ersten Rohrleitung 2 zur Zuführung einer Flüssigkeit, wobei es sich hierbei um Klar- oder Siebwasser, nachfolgend vereinfachend Wasser genannt, handelt. Das Wasser in der ersten Rohrleitung 2 weist eine Strömungsgeschwindigkeit von 1 m/s bis 5 m/s und einen Druck von 2 bis 4 bar auf. Die Vorrichtung 1 umfasst eine zweite Rohrleitung 3 zur Zuführung eines Feststoff-Flüssigkeits-Gemisches mit einer Strömungsgeschwindigkeit von < 4 m/s, wobei es sich hierbei um eine Papierfasersuspension handelt. Der zweiten Rohrleitung 3 ist ein nicht dargestellter Fraktionator nachgeschaltet.

Die Papierfasersuspension weist Verunreinigungen in Form von Störstoffen und Verunreinigungen (Druckfarbenpartikel, Stickies, kleinste Plastikteilchen usw.) auf. Zwischen der ersten und der zweiten Rohrleitung 2, 3 ist eine dritte Rohrleitung 4 angeordnet, welche ein Venturi-Mischelement 5 umfasst. Zu diesem Venturi-Mischelement 5 führt eine vierte Rohrleitung 6 zur Leitung eines Gases, im beschriebenen Beispiel Luft. In dem nach dem Venturi-Prinzip funktionierenden Mischelement 5 wird das Wasser mit Gasblasen unterschiedlicher Größe angereichert und dabei stark beschleunigt. Nach dem Venturi-Mischelement weist das mit Gasblasen angereicherte Wasser eine Strömungsgeschwindigkeit von etwa 9 m/s bis 25 m/s auf. Dieses mit Gasblasen angereicherte Wasser wird dem Feststoff-Flüssigkeits-Gemisch zugeführt, wobei durch die kinetische Energie der Gasblasen beim Zusammenstoßen der Gasblasen mit Papierfasern, an denen Störstoffe und Verunreinigungen anhaften, diese Störstoffe und Verunreinigungen von den Papierfasern abgelöst werden. Dies ist ein entscheidender Vorteil des erfindungsgemäßen Verfahrens.
Das mit Gasblasen angereicherte Wasser enthält eine große Anzahl von Gasblasen unterschiedlicher Größe. Diese unterschiedliche Größe der Gasblasen ist wichtig, um eine Anlagerung an eine große Bandbreite unterschiedlich großer abzutrennender Störstoffe und Verunreinigungen zu erreichen. Eine effektive Abtrennung unterschiedlicher Störstoffe und Verunreinigungen erfordert eine Anpassung der Anzahl und der Größenverteilung der Gasblasen. Die Anzahl und die Größenverteilung der Gasblasen im Wasser hängt neben der Strömungsgeschwindigkeit der Flüssigkeit und der angesaugten Menge Gases in hohem Maße von der konstruktiven Ausbildung des Venturi-Mischelementes 5 ab.

Figur 2 zeigt schematisch eine Schnittdarstellung des Venturi-Mischelementes 5. Das Venturi-Mischelement 5 weist einen ersten Konus 7 auf, welcher zu einer Verjüngung des Querschnitts führt. An die große Durchgangsöffnung des ersten Konus 7 ist die dritte Rohrleitung 4 angeschlossen, und zwar mit jenem Teil, der mit der ersten Rohrleitung 2 verbunden ist. Des Weiteren weist das Venturi-Mischelement 5 einen ersten nicht konischen Leitungsabschnitt 8 auf, welcher sich an die kleinen Durchgangsöffnung 12 des ersten Konus 7 anschließt und im Wesentlichen die gleiche Querschnittsfläche, nämlich der der kleinen Durchgangsöffnung 12 des ersten Konus 7, aufweist. Der erste nicht konische Leitungsabschnitt 8 mündet in einer einen Hohlraum ausbildenden Kammer 9. An diese Kammer 9 ist die vierten Rohrleitung 6 angeschlossen. Fluchtend gegenüberliegend zur Einmündung des ersten nicht konischen Leitungsabschnittes 8 in die Kammer 9 ist ein zweiter nicht konischer Leitungsabschnitt 10 angeordnet, an den sich ein zweiter Konus 11 mit seiner kleinen Durchgangsöffnung 13 anschließt. An die große Durchgangsöffnung des zweiten Konus 11 ist die dritte Rohrleitung 4 angeschlossen, und zwar mit jenem Teil, der mit der zweiten Rohrleitung 3 verbunden ist. Die Kammer 9 bildet eine erhebliche Vergrößerung der Querschnittsfläche.

Über den mit der ersten Rohrleitung 2 verbundenen Teil der dritten Rohrleitung 4 wird dem Venturi-Mischelement 5 Wasser zugeführt. Das Wasser wird durch den ersten Konus 7 in seiner Strömungsgeschwindigkeit beschleunigt und tritt als Flüssigkeitsstrahl mit erhöhter Strömungsgeschwindigkeit in den Hohlraum der Kammer 9 ein. Dabei wird ein Unterdruck erzeugt, infolgedessen das mit erhöhter Geschwindigkeit in den Hohlraum der Kammer 9 einströmende Wasser Gas aufnimmt bzw. mitreist, das über die vierte Rohleitung in den Hohlraum eingesaugt wird. Nach der Kammer 9, d.h. nach der sprungartigen Vergrößerung der Querschnittsfläche für das Wasser, das diese Kammer 9 quasi als Wasserstrahl durchströmt, tritt der Wasserstrahl mit dem aufgenommenen bzw. mitgerissenen Gas in den zweiten nicht konischen Leitungsabschnitt 10 der kleinen Durchgangsöffnung 13 des zweiten Konus 11 ein. Dieser Leitungsabschnitt 10 setzt sich in dem zweiten Konus 11 fort, wobei eine weitere Vergrößerung der Querschnittsfläche für das Wasser erfolgt. In diesem Leitungsabschnitt 10 sowie im sich anschließenden zweiten Konus 11 des Venturi-Mischelementes 5 erfolgt eine sehr intensive Vermischung des Wassers mit dem aufgenommenen bzw. mitgerissenen Gas, wobei sich das Gas als Blasen unterschiedlicher Größe im Wasser verteilt. Beim Austritt aus dem Venturi-Mischelement 5 in die dritte Rohrleitung 4 ist das Wasser stark mit Gas in Form unterschiedlich großer Blasen angereichert. Diese unterschiedlich großen Gasblasen sind wichtig, um eine Anlagerung an eine große Bandbreite unterschiedlich großer abzutrennender Störstoffe und Verunreinigungen zu erreichen. In einer Ausgestaltung des Ausführungsbeispiels ist die dritte Rohrleitung 4 als DN 80-Rohr ausgebildet. Der erste konische Bereich 7 weist eine Verkleinerung der Querschnittsfläche von einem Querschnittsdurchmesser der großen Durchgangsöffnung von 16 mm auf einen Querschnittsdurchmesser der kleinen Durchgangsöffnung von 12 mm auf. Der erste nicht konische Leitungsabschnitt 8 weist folglich einen Querschnittdurchmesser von 12 mm auf und besitzt eine Länge von etwa 50 mm. Längere Ausbildungen des nicht konischen Leitungsabschnittes 8 sind möglich. Die Kammer 9 besitzt eine Breite von 10 mm, d.h. die Einmündung des ersten nicht konischen Leitungsabschnittes 8 in die Kammer 9 ist 10 mm beabstandet zur gegenüberliegenden Einmündung des zweiten nicht konischen Leitungsabschnittes 10, an den sich der zweite Konus 11 anschließt. Der zweite nicht konische Bereich 10 besitzt einen Querschnitt mit einem Durchmesser von 16 mm ebenso wie die kleine Durchgangsöffnung 13 des zweite Konus 11. Die große Durchgangsöffnung des zweiten Konus 11 besitzt einen Querschnitt mit einem Durchmesser von 18 mm. Der zweite nicht konische Bereich 10 nach der Kammer 9 und der zweite konische Bereich 11 mit einer Vergrößerung des Durchmessers von 16 mm auf 18 mm sind wichtig für die Bildung unterschiedlich großer Gasblasen im Wasser. Hier werden die für die spätere Flotation benötigten unterschiedlich großen Gasblasen gebildet. Das Venturi-Mischelement besitzt eine Gesamtlänge von 300 mm.

Vorstehend beschrieben wurde ein Venturi-Mischelement 5 mit einem Konenpaar also mit zwei gegeneinander gerichtet angeordneten Konen 7, 11. Es ist möglich und vorteilhaft, mehr als ein Konenpaar in einem Venturi-Mischelement 5 anzuordnen.

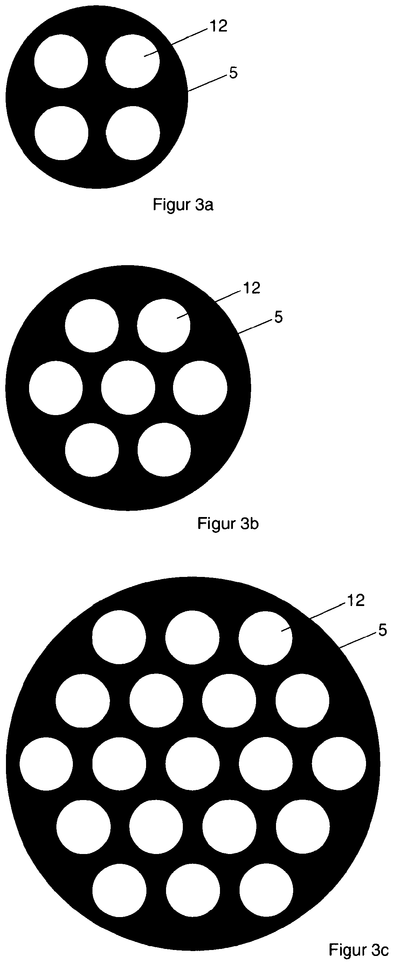

Die Figuren 3a bis c zeigen die Anordnung der Einmündungen der nicht konischen Leitungsabschnitte in einer Seitenwand der Kammer 9 zwischen den Konen 7, 11 für ein Venturi-Mischelement 5 mit 4, 7 bzw. 19 Konenpaaren.

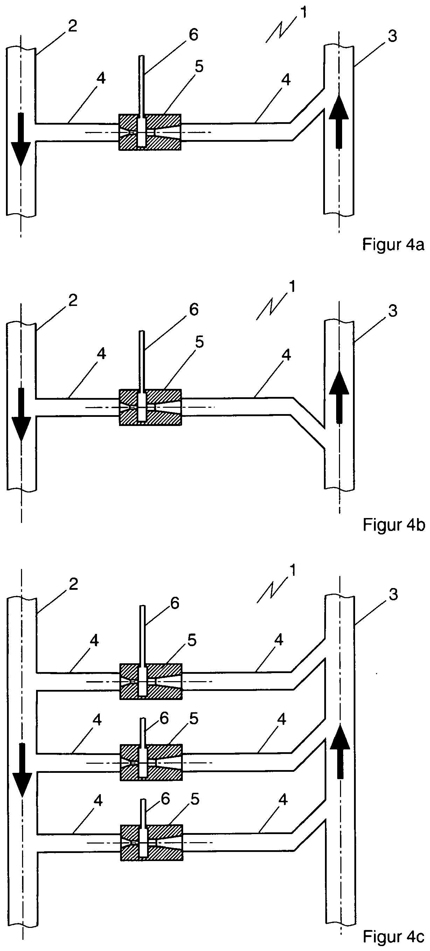

In einem weiteren Ausführungsbeispiel ist in Figur 4a eine Ausgestaltung der Vorrichtung gemäß der Figur 1 dargestellt, wobei die dritte Rohrleitung 4 in einem Winkel von 45° in die zweite Rohrleitung 3 einmündet. Die Einmündung erfolgt dabei in Strömungsrichtung des Feststoff-Flüssigkeits-Gemisches, welche durch den Pfeil repräsentiert wird. Bevorzugt weist die zweite Rohrleitung 3 einen größeren Durchmesser als die dritte Rohrleitung 4 auf.
In einer weiteren Ausgestaltung des vorbeschriebenen Ausführungsbeispiels, dargestellt in Figur 4b, mündet die dritte Rohrleitung 4 entgegen der Strömungsrichtung des Feststoff-Flüssigkeits-Gemisches in die zweite Rohrleitung 3 ein. Dabei sollten jedoch die 45° nicht unterschritten werden, da andernfalls die Durchmischung des Feststoff-Flüssigkeits-Gemisches mit den mit dem Wasser eingeleiteten Gasblasen weniger effektiv ist, wodurch die Effizienz des Flotationsvorgangs leidet.

Eine weitere Ausgestaltung des vorbeschriebenen Ausführungsbeispiels ist in Figur 4c dargestellt. Dabei umfasst die Vorrichtung mehrere Venturi-Mischelemente 5, welche in Strömungsrichtung des Feststoff-Flüssigkeits-Gemisches nacheinander in die zweite Rohrleitung 3 einmünden. Durch die Verwendung mehrerer parallel wirkender Venturi-Mischelemente 5 ergibt sich eine bessere Durchmischung des Feststoff-Flüssigkeits-Gemisches mit den mit dem Wasser in der zweiten Rohrleitung 3 eingeleiteten Gasblasen. Zudem erhöht sich der Reinigungseffekt bei mehreren Zuführungsorten des mit Gasblasen angereicherten Wassers in das Feststoff-Flüssigkeits-Gemisch.

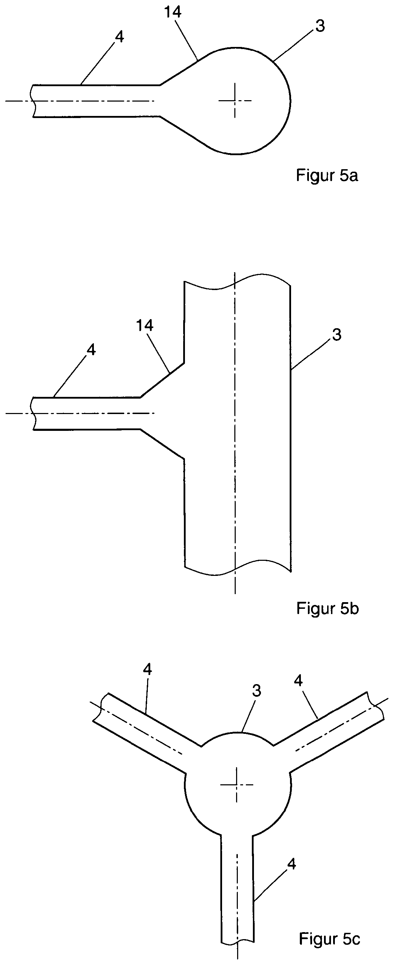

Die Figur 5a zeigt schematisch eine fächerförmige Einmündung 14 der dritten Rohrleitung 4 in die zweite Rohrleitung 3. Durch eine fächerförmige Ausbildung der Einmündung 14 wird eine bessere Durchmischung des Feststoff-Flüssigkeits-Gemisches in der zweiten Rohrleitung 3 mit dem mit Gasblasen angereicherten Wasser aus der dritten Rohrleitung 4 erreicht. Die Querschnittsfläche der fächerförmigen Einmündung 14 ist dabei genau so groß wie die Querschnittsfläche der zweiten Rohrleitung 3, damit die Strömungsgeschwindigkeit des mit Gasblasen angereicherten Wassers nicht verändert wird und der Reinigungseffekt nicht negativ beeinflusst wird.

In Figur 5b ist ebenfalls schematisch eine alternative Ausgestaltung der fächerförmigen Einmündung 14 der dritten Rohrleitung 4 in die zweite Rohrleitung 3 gezeigt, wobei die fächerförmige Aufspreizung der Einmündung 14 parallel zur Strömungsrichtung des Feststoff-Flüssigkeits-Gemisches in der zweiten Rohrleitung 3 ausgerichtet ist.

Figur 5c zeigt die Einmündung dreier dritter Rohrleitungen 4 in die zweite Rohrleitung 3, wobei die dritten Rohrleitungen 4 sternförmig um die zweite Rohrleitung 3 angeordnet sind. Auch diese Anordnung der Einmündungen mehrerer paralleler Ströme von mit Gasblasen angereichertem Wasser in die das Feststoff-Flüssigkeits-Gemisch führende zweite Rohrleitung 3 bewirkt eine bessere Durchmischung des Feststoff-Flüssigkeits-Gemisches mit den mit dem Wasser in der zweiten Rohrleitung 3 eingeleiteten Gasblasen.

Obwohl in den Figuren nicht veranschaulicht, umfasst die Vorrichtung 1 Einrichtungen zur Steuerung bzw. Regelung der Wasser- und/oder Gasströme. Dies sind z.B. vor und nach dem Venturi-Mischelement 5 in der dritten Rohrleitung 4 sowie in der vierten Rohrleitung 6 angeordnete Schieber zur Beeinflussung des jeweiligen Wasser- und/oder Gasstromes. Die Schieber können elektrisch oder manuell bedienbar ausgebildet sein. Mittels ihrer können die Anzahl, die Größe und die Größenverteilung der Gasblasen in die Flüssigkeit beeinflusst werden.

### Liste der verwendeten Bezugszeichen

- 1: Vorrichtung
- 2: erste Rohrleitung
- 3: zweite Rohrleitung
- 4: dritte Rohrleitung
- 5: Venturi-Mischelement
- 6: vierte Rohrleitung
- 7: erster Konus
- 8: erster nicht konischer Leitungsabschnitt
- 9: Kammer, Hohlraum
- 10: zweiter nicht konischer Leitungsabschnitt
- 11: zweiter Konus
- 12: kleine Durchgangsöffnung des ersten Konus 7
- 13: kleine Durchgangsöffnung des zweiten Konus 10
- 14: fächerförmige Einmündung der dritten Rohrleitung in die zweite Rohrleitung

## Patentansprüche

1. Vorrichtung (1) zur Reinigung von verunreinigten Feststoff-Flüssigkeits-Gemischen, umfassend
• zumindest eine erste Rohrleitung (2) für die Zuführung einer Flüssigkeit, bevorzugt Wasser,
• zumindest eine zweite Rohrleitung (3) für die Zuführung eines Feststoff-Flüssigkeits-Gemisches, bevorzugt einer Faserstoff-Suspension, besonders bevorzugt einer Papierfasersuspension,
• zumindest eine dritte Rohrleitung (4), welche die erste und die zweite Rohrleitung (2, 3) verbindet und zumindest ein Mischelement (5) umfasst, welches nach dem Venturi-Prinzip arbeitet,
• wobei das Mischelement (5) zwei gegeneinander gerichtete Konen (7, 11) aufweist, die jeweils mit ihrer kleinen Durchgangsöffnung in einer einen Hohlraum bildenden Kammer (9) mit einer sprungartigen Vergrößerung des Durchgangsquerschnitts münden, wobei der Bereich der Einmündung in die einen Hohlraum bildende Kammer (9) derart ausgebildet ist, dass die jeweils kleine Durchgangsöffnung (12, 13) der Konen (7, 11) in einem nicht konischen Leitungsabschnitt (8, 10) entsprechend der Querschnittsfläche der kleinen Durchgangsöffnungen (12, 13) fortgesetzt wird, diese nicht konischen Leitungsabschnitte (8, 10) an den Stellen der sprunghaften Vergrößerung des Durchgangsquerschnitts in die besagte Kammer (9) zwischen den Konen (7, 11) einmünden, die große Durchgangsöffnung des ersten Konus (7) über die dritte Rohrleitung (4) mit der ersten Rohrleitung (2) verbunden ist und die große Durchgangsöffnung des zweiten Konus (11) über die dritte Rohrleitung (4) mit der zweiten Rohrleitung (2) verbunden ist, die kleine Durchgangsöffnung (12) des ersten Konus (7) zwischen 20 bis 40 % kleiner als die kleine Durchgangsöffnung(13) des zweiten Konus (11) ausgebildet ist und die zwei gegeneinander gerichteten Konen (7, 11) und die nichtkonischen Leitungsabschnitte längsaxial zueinander angeordnet sind,
• zumindest eine vierte Rohrleitung (6) zur Leitung eines Gases, vorzugsweise Luft, wobei die vierte Rohrleitung (6) in die einen Hohlraum bildende Kammer (9) des Mischelementes (5) einmündet sowie
• mindestens einen der zweiten Rohrleitung (3) nachgeschalteten Fraktionator zum Ausscheiden des mittels Flotation entstehenden Schaums.

2. Vorrichtung nach Anspruch 1,
**dadurch gekennzeichnet, dass**
dass die dritte Rohrleitung (4) in einem Winkel von 90° ± 45° in die zweite Rohrleitung (3) einmündet.

3. Vorrichtung nach Anspruch 2,
**dadurch gekennzeichnet, dass**
dass die dritte Rohrleitung (4) in einem Winkel von 45° in Strömungsrichtung oder entgegengesetzt zur Strömungsrichtung der zweiten Rohrleitung in die zweite Rohrleitung (3) einmündet.

4. Vorrichtung nach Anspruch 1 bis 3,
**dadurch gekennzeichnet, dass**
die Vorrichtung (1) weitere Rohrleitungen (4) mit einem Mischelement (5) umfasst, welche kaskadenförmig angeordnet und der Einmündung der dritten Rohrleitung (4) in die zweite Rohrleitung (3) nachgeschaltet sind.

5. Verfahren zur Reinigung von verunreinigten Feststoff-Flüssigkeits-Gemischen, bevorzugt verunreinigten Fasersuspensionen, besonders bevorzugt verunreinigten Papierfasersuspensionen, umfassend die Schritte:
• Zuführung einer Flüssigkeit, bevorzugt Wasser, zu einem Venturi-Mischelement (5) mit den im Anspruch 1 genannten Merkmalen,
• Leitung eines Gases, vorzugsweise Luft, zu dem Venturi-Mischelement (5),
• Anreicherung der Flüssigkeit mit Gasblasen in dem Venturi-Mischelement (5) derart, dass die Flüssigkeit eine im Mischelement (5) angeordnete Kammer (9), in die das Gas eingeleitet wird, als Flüssigkeitsstrahl passiert,
• Zuführung der mit Gasblasen angereicherten Flüssigkeit zu einem verunreinigten Feststoff-Flüssigkeits-Gemisch, wobei die mit Gasblasen angereicherte Flüssigkeit eine höhere Strömungsgeschwindigkeit aufweist als das Feststoff-Flüssigkeits-Gemisch,
• Vermischung der mit Gasblasen angereicherten Flüssigkeit und des Feststoff-Flüssigkeits-Gemisches, wobei durch die kinetische Energie der Gasblasen Störstoffe und Verunreinigungen von den Feststoffen des Feststoff-Flüssigkeits-Gemisches abgelöst werden und sich an den Gasblasen anlagern, wobei die Gasblasen nachfolgend die Störstoffe und Verunreinigungen als Schaum aus dem Feststoff-Flüssigkeits-Gemisch austragen,
• Trennung des Feststoff-Flüssigkeits-Gemisches und des Schaumes in einem nachfolgenden Flotationsverfahren.

6. Verfahren nach Anspruch 5,
**dadurch gekennzeichnet, dass**
die Anreicherung der Flüssigkeit mit Gasblasen derart erfolgt, dass die mit Gasblasen angereicherte Flüssigkeit ein Verhältnis von Gas zu Flüssigkeit von 1 - 4 : 1, bevorzugt 1 : 1 aufweist.

7. Verfahren nach Anspruch 5 bis 6,
**dadurch gekennzeichnet, dass**
die Flüssigkeit in der ersten Rohrleitung (2) mit einer Strömungsgeschwindigkeit von 1 m/s bis 5 m/s strömt.

8. Verfahren nach Anspruch 5 bis 7,
**dadurch gekennzeichnet, dass**
das Feststoff-Flüssigkeits-Gemisch in der zweiten Rohrleitung (3) mit einer Strömungsgeschwindigkeit von < 4 m/s strömt.

9. Verfahren nach Anspruch 5 bis 8,
**dadurch gekennzeichnet, dass**
die mit Gasblasen angereicherte Flüssigkeit nach dem Venturi-Mischelement (5) mit einer Strömungsgeschwindigkeit von von 5 - 40 m/s, vorzugsweise 5 - 25 m/s, bevorzugt von 9 - 25 m/s, strömt.

10. Verwendung einer Vorrichtung nach einem der Ansprüche 1 bis 4 und eines Verfahrens nach einem der Ansprüche 5 bis 9 zur Reinigung von verunreinigten Feststoff-Flüssigkeits-Gemischen.

## Claims

1. Apparatus (1) for cleaning contaminated solid-liquid mixtures, comprising:
• at least one first pipeline (2) for supplying a liquid, with preference water,
• at least one second pipeline (3) for supplying a solid-liquid mixture, with preference a fibrous suspension, with particular preference a paper fibre suspension,
• at least one third pipeline (4), which connects the first and second pipelines (2, 3) and comprises at least one mixing element (5), which operates according to the Venturi principle,
• wherein the mixing element (5) has two oppositely directed cones (7, 11), which each open with their small through-opening into a chamber (9) forming a cavity, while causing a jump in the size of the cross section of the through-opening, wherein the region of the opening into the chamber (9) forming a cavity is designed such that the small through-opening (12, 13) of each of the cones (7, 11) is continued in a non-conical section of line (8, 10) in a way corresponding to the cross-sectional area of the small through-openings (12, 13), with these non-conical sections of line (8, 10) opening into said chamber (9) between the cones (7, 11) at the locations where there is a jump in the size of the cross section of the through-opening, the large through-opening of the first cone (7) is connected via the third pipeline (4) to the first pipeline (2) and the large through-opening of the second cone (11) is connected via the third pipeline (4) to the second pipeline (2), the small through-opening (12) of the first cone (7) is formed between 20 and 40% smaller than the small through-opening (13) of the second cone (11) and the two oppositely directed cones (7, 11) and the non-conical sections of line are arranged in longitudinal axial alignment,
• at least one fourth pipeline (6) for conducting a gas, preferably air, wherein the fourth pipeline (6) opens into a chamber (9) of the mixing element (5) forming a cavity, and
• at least one fractionator arranged downstream of the second pipeline (3) for removing the foam produced by flotation.

2. Apparatus according to Claim 1,
**characterized in that**
the third pipeline (4) opens into the second pipeline (3) at an angle of 90°±45°.

3. Apparatus according to Claim 2,
**characterized in that**
the third pipeline (4) opens into the second pipeline (3) at an angle of 45° in the direction of flow or opposite to the direction of flow of the second pipeline.

4. Apparatus according to Claims 1 to 3,
**characterized in that**
the apparatus (1) comprises further pipelines (4) with a mixing element (5), which are arranged in the form of a cascade and are arranged downstream of the opening of the third pipeline (4) into the second pipeline (3).

5. Method for cleaning contaminated solid-liquid mixtures, with preference contaminated fibre suspensions, with particular preference paper fibre suspensions, comprising the steps of:
• supplying a liquid, with preference water, to a Venturi mixing element (5) with the features mentioned in Claim 1,
• conducting a gas, preferably air, to the Venturi mixing element (5),
• enriching the liquid with gas bubbles in the Venturi mixing element (5) in such a way that the liquid passes, as a stream of liquid, a chamber (9), arranged in the mixing element (5), into which the gas is introduced,
• supplying the liquid enriched with gas bubbles to a contaminated solid-liquid mixture, wherein the liquid enriched with gas bubbles has a higher flow velocity than the solid-liquid mixture,
• mixing the liquid enriched with gas bubbles together with the solid-liquid mixture, whereby impurities and contaminants are detached from the solids of the solid-liquid mixture by the kinetic energy of the gas bubbles and accumulate on the gas bubbles, wherein the gas bubbles subsequently remove the impurities and contaminants from the solid-liquid mixture as foam, and
• separating the solid-liquid mixture and the foam in a subsequent flotation process.

6. Method according to Claim 5,
**characterized in that**
the liquid is enriched with gas bubbles such that the liquid enriched with gas bubbles has a ratio of gas to liquid of 1-4:1, with preference 1:1.

7. Method according to Claims 5 to 6,
**characterized in that**
the liquid in the first pipeline (2) flows with a flow velocity of 1 m/s to 5 m/s.

8. Method according to Claims 5 to 7,
**characterized in that**
the solid-liquid mixture in the second pipeline (3) flows at a flow velocity of < 4 m/s.

9. Method according to Claims 5 to 8,
**characterized in that**
the liquid enriched with gas bubbles flows downstream of the Venturi mixing element (5) with a flow velocity of 5-40 m/s, preferably 5-25 m/s, with preference of 9-25 m/s.

10. Use of an apparatus according to one of Claims 1 to 4 and a method according to one of Claims 5 to 9 for cleaning contaminated solid-liquid mixtures.

## Revendications

1. Dispositif (1) pour épurer des mélanges solides-liquides contaminés, comprenant
• au moins une première canalisation (2) pour amener un liquide, de préférence de l'eau,
• au moins une deuxième canalisation (3) pour amener un mélange solide-liquide, de préférence une suspension de matières fibreuses, de plus grande préférence une suspension de fibres de papier,
• au moins une troisième canalisation (4) reliant les première et deuxième canalisations (2, 3) et au moins un élément mélangeur (5) fonctionnant selon le principe de Venturi,
• dans lequel l'élément mélangeur (5) présente deux cônes opposés l'un à l'autre (7, 11) débouchant respectivement par leur petite ouverture traversante sur une chambre (9) formant une cavité avec une augmentation brusque de la section de passage, dans lequel la zone de l'embouchure sur la chambre (9) formant une cavité est réalisée de telle sorte que respectivement la petite ouverture traversante (12, 13) des cônes (7, 11) se prolonge par une section de conduite non conique (8, 10) selon la superficie de la section des petites ouvertures traversantes (12, 13), ces sections de conduite non coniques (8, 10) débouchent aux endroits de l'augmentation brusque de la section de passage sur ladite chambre (9) entre les cônes (7, 11), la grande ouverture traversante du premier cône (7) est reliée par la troisième canalisation (4) à la première canalisation (2) et la grande ouverture traversante du deuxième cône (11) est reliée par la troisième canalisation (4) à la deuxième canalisation (2), la petite ouverture traversante (12) du premier cône (7) est réalisée en étant plus petite de 20 à 40 % que la petite ouverture traversante (13) du deuxième cône (11), et les deux cônes opposés l'un à l'autre (7, 11) sont disposés dans les sections de conduite non coniques le long de l'axe longitudinal l'un par rapport à l'autre,
• au moins une quatrième canalisation (6) pour conduire un gaz, de préférence de l'air, la quatrième canalisation (6) débouchant dans la chambre (9) formant une cavité de l'élément mélangeur (5),
• ainsi qu'au moins un séparateur de fractions placé en aval de la deuxième canalisation (3) pour séparer la mousse formée par flottation.

2. Dispositif selon la revendication 1, **caractérisé en ce que** la troisième canalisation (4) débouche sur la deuxième canalisation (3) selon un angle de 90° ±45°.

3. Dispositif selon la revendication 2, **caractérisé en ce que** la troisième canalisation (4) débouche sur la deuxième canalisation (3) selon un angle de 45° dans le sens d'écoulement ou à l'opposé du sens d'écoulement de la deuxième canalisation.

4. Dispositif selon les revendications 1 à 3, **caractérisé en ce que** le dispositif (1) comprend d'autres canalisations (4) avec un élément mélangeur (5), disposées en cascade et placées en aval de l'embouchure de la troisième canalisation (4) dans la deuxième canalisation (3).

5. Procédé pour épurer des mélanges solides-liquides contaminés, de préférence des suspensions de fibres contaminées, de plus grande préférence des suspensions de fibres de papier contaminées, comprenant les étapes consistant à :
• amener un liquide, de préférence de l'eau, à un mélangeur Venturi (5) présentant les particularités citées à la revendication 1,
• conduire un gaz, de préférence de l'air, jusqu'à l'élément mélangeur Venturi (5),
• enrichir le liquide en bulles de gaz dans l'élément mélangeur Venturi (5) de telle sorte que le liquide sous forme de jet de liquide passe par une chambre (9) disposée dans l'élément mélangeur (5) dans laquelle le gaz est introduit,
• amener le liquide enrichi en bulles de gaz à un mélange solide-liquide contaminé, le liquide enrichi en bulles de gaz présentant une vitesse d'écoulement supérieure au mélange solide-liquide,
• mélanger le liquide enrichi en bulles de gaz et le mélange solide-liquide, dans lequel l'énergie cinétique des bulles de gaz détache des impuretés et des saletés des solides du mélange solide-liquide qui se déposent sur les bulles de gaz, dans lequel les bulles de gaz évacuent ensuite les impuretés et saletés sous forme de mousse du mélange solide-liquide,
• séparer le mélange solide-liquide et la mousse dans un procédé de flottation consécutif.

6. Procédé selon la revendication 5, **caractérisé en ce que** l'enrichissement du liquide en bulles de gaz est effectué de telle sorte que le liquide enrichi en bulles de gaz présente un rapport gaz/liquide de 1 à 4 : 1, de préférence de 1 : 1.

7. Procédé selon les revendications 5 à 6, **caractérisé en ce que** le liquide s'écoule dans la première canalisation (2) avec une vitesse d'écoulement de 1 m/s à 5 m/s.

8. Procédé selon les revendications 5 à 7, **caractérisé en ce que** le mélange solide-liquide s'écoule dans la deuxième canalisation (3) avec une vitesse d'écoulement de < 4 m/s.

9. Procédé selon les revendications 5 à 8, **caractérisé en ce que** le liquide enrichi en bulles de gaz s'écoule après l'élément mélangeur Venturi (5) avec une vitesse d'écoulement de 5 à 40 m/s, de préférence de 5 à 25 m/s, de préférence de 9 à 25 m/s.

10. Utilisation d'un dispositif selon l'une quelconque des revendications 1 à 4 et d'un procédé selon l'une quelconque des revendications 5 à 9 pour épurer des mélanges solide-liquide contaminés.
